# EUROPEAN PATENT APPLICATION

(11) **EP 4 789 810 A1**
(43) Date of publication of application: **12.08.2026**
(21) Application number: 25857958.0
(22) Date of filing: 21.02.2025
(51) Int. Cl.: B23K 35/30, B23K 35/02, B21B 1/16, C22C 38/58, C22C 38/50, C22C 38/44, C22C 38/48, C22C 38/02, C22C 38/06

(54) **WIRE ROD FOR WELDING RODS AND MANUFACTURING METHOD THEREFOR**

(30) Priority: 17.12.2024 KR 20240189355
(71) Applicant: POSCO Co., Ltd, Pohang-si, Gyeongsangbuk-do 37859 (KR)
(72) Inventor: BAE, Gyu-Yeol, Incheon 21985 (KR)
(74) Representative: Nederlandsch Octrooibureau
(86) International application number: PCT/KR2025/002494
(87) International publication number: WO 2026/134425

(57) **Abstract**

A wire rod for a welding rod and a method for manufacturing the same are provided.

An aspect of the present disclosure is to provide a wire rod for a welding rod and a method for manufacturing the same.

Preferably, a preferred aspect of the present disclosure is to provide a wire rod for a welding rod having excellent strength and wire drawing workability while having excellent economic feasibility, and a method for manufacturing the same.

## Description

### Technical Field

The present disclosure relates to a wire rod for a welding rod and a method for manufacturing the same.

### Background Art

In the case of a wire rod for a welding rod, a wire rod having a diameter of about 5.5 mm is worked to have a diameter of about 2.2 mm by first wire drawing, subjected to a wire drawing heat treatment and a plating process, and then manufactured into a welding rod having a final diameter of 0.8 to 1.6 mm through second wire drawing.

Herein, in the case of a conventional ultra-high strength wire rod, a pre-heat treatment is performed for securing wire drawing workability in a step before the first wire drawing, which causes increased production costs and decreased productivity.

Meanwhile, in the case of a conventional wire rod for a welding rod, expensive Ni is included in an amount of about 2 to 3% for securing low-temperature impact physical properties required during multilayer welding of a thick sheet, and when it is applied to the automotive industry, an increase in manufacturing costs is caused to be obstacles to expanding industrial application.

Technology related to the wire rod for a welding rod includes Patent Documents 1 and 2.

Patent Document 1 discloses a wire rod for a special welding rod including, by weight: 0.03 to 0.13% of C, 1.5 to 2.5% of Mn, 0.5% to 1.2% of Si, 0.2 to 0.4% to Mo, 0.1 to 0.3% of Ti, 70 ppm or less of N, 0.03% or less of S, a remainder of Fe, and other unavoidable impurities, wherein an average size of crystal grains is 10 to 30 µm.

Patent Document 2 discloses a wire rod for a welding rod including, by weight: 0.01 to 0.15% of C, 0.001 to 0.15% of Si, 0.5 to 3.0% of Mn, more than 0% and 0.03% or less of P, more than 0% and 0.03% or less of S, more than 0% and 0.5% or less of Cu, 0.05 to 0.9% of Ni, 0.001 to 0.1% of Cr, 0.001 to 0.5% of Mo, 0.001 to 0.05% of Al, 0.0005 to 0.01% of B, 0.001 to 0.01% of N, and as at least any one or more of V, Nb, and Ti, 0.05 to 0.2% of V, 0.005 to 0.1% to Nb, 0.05 to 0.3% of Ti, a remainder of Fe, and unavoidable impurities, wherein the wiring material has a tensile strength of up to 700 MPa with a deviation of 40 MPa or less.

However, Patent Documents 1 and 2 have low tensile strength and are difficult to be applied to welding of a steel material for giga steel.

### [Related Art Document]

(Patent Document 1) Korean Patent Registration Publication No. 1060785
(Patent Document 2) Korean Patent Laid-Open Publication No. 2024-0063539

### Summary of Invention

### Technical Problem

An aspect of the present disclosure is to provide a wire rod for a welding rod and a method for manufacturing the same.

A preferred aspect of the present disclosure is to provide a wire rod for a welding rod having excellent strength and wire drawing workability while having excellent economic feasibility, and a method for manufacturing the same.

An object of the present disclosure is not limited to the above description. Any person with ordinary skill in the art to which the present disclosure pertains will have no difficulty in understanding further objects of the present disclosure from the general description of the present specification.

### Solution to Problem

According to an aspect of the present disclosure, a wire rod for a welding rod includes, by weight: 0.050 to 0.160% of C, 0.0010 to 0.250% of Si, 1.0 to 2.50% of Mn, 0.030% or less (excluding 0%) of P, 0.030% or less (excluding 0%) of S, 0.40 to 6.0% of Cr, 0.10 to 0.650% of Mo, 0.20% or less (excluding 0%) of Al, 0.40% or less (excluding 0%) of Ni, 0.20% or less (excluding 0%) of Ti, 0.10% or less (excluding 0%) of Nb, a remainder of Fe, and other unavoidable impurities, wherein a microstructure includes bainitic ferrite, the bainitic ferrite has a minimum size of effective grain of 0.50 µm or more, and the bainitic ferrite has a maximum size of effective grain of 20.0 µm or less.

The wire rod may further include one or more of 0.20% or less of V, 0.10% or less of Zr, and 0.10% or less of B.

The wire rod may further include 0.50% or less of Cu.

The microstructure may include, by area: 0.50% or less (including 0%) of retained austenite and a remainder of bainitic ferrite.

The bainitic ferrite may have an average effective grain size of 10 µm or less.

The wire rod may have a tensile strength of 840 to 1000 MPa.

The wire rod may have a reduction of area (RA) of 60 to 75%.

According to another aspect of the present disclosure, a method for manufacturing a wire rod for a welding rod includes: preparing a billet including, by weight: 0.050 to 0.160% of C, 0.0010 to 0.250% of Si, 1.0 to 2.50% of Mn, 0.030% or less (excluding 0%) of P, 0.030% of less (excluding 0%) of S, 0.40 to 6.0% of Cr, 0.10 to 0.650% of Mo, 0.20% of less (excluding 0%) of Al, 0.40% of less (excluding 0%) of Ni, 0.20% of less (excluding 0%) of Ti, 0.10% of less (excluding 0%) of Nb, a remainder of Fe, and other unavoidable impurities; reheating the billet at 1050 to 1250°C; extracting the reheated billet at 1050 to 1150°C and then performing wire rod rolling to obtain a wire rod; coiling the wire rod at 860 to 940°C; and cooling the wire rod at a cooling rate of 2.0 to 3.0°C/S on a Stelmor cooling conveyor.

The billet may further include one or more of 0.20% or less of V, 0.10% or less of Zr, 0.010% or less of B.

The billet may further include 0.50% or less of Cu.

### Advantageous Effects of Invention

According to an aspect of the present disclosure, a wire rod for a welding rod and a method for manufacturing the same may be provided.

According to a preferred aspect of the present disclosure, a wire rod for a welding rod having excellent strength and wire drawing workability while having excellent economic feasibility, and a method for manufacturing the same.

### Brief Description of Drawings

FIG. 1 is image quality (IQ) and inverse pole figure (IPF) photographs observing Inventive Example 2 with EBSD.
FIG. 2 is image quality (IQ) and inverse pole figure (IPF) photographs observing Comparative Example 3 with EBSD.
FIG. 3 is image quality (IQ) and inverse pole figure (IPF) photographs observing Comparative Example 7 with EBSD.

### Best Mode for Invention

Hereinafter, preferred embodiments of the present disclosure will be described. However, the embodiments of the present disclosure may be modified in many different forms, and the scope of the disclosure should not be limited to the embodiments set forth herein.

In addition, the embodiments of the present disclosure are provided so that the present disclosure will be thorough and complete, and will fully convey the concept of the disclosure to those with ordinary skill in the art.

In describing the embodiments of the present description, when it is determined that a detailed description of known technology related to the present disclosure may unnecessarily obscure the gist of the present disclosure, the detailed description will be omitted. Further, the following terms are defined in consideration of the functions in the present disclosure and may vary depending on the intention of users and operators, custom, and the like. Therefore, the terms should be defined based on the contents throughout the specification. The terms used in the detailed description are for describing the example embodiments of the present disclosure, and should not restrictive. Unless explicitly used otherwise, an expression in a singular form includes a meaning of a plural form.

The expression such as "comprising" or "being provided" in the present description is for referring to certain characteristics, numbers, steps, actions, elements, or a part or a combination thereof, and it should not be construed to exclude the presence or possibility of one or more other characteristics, numbers, steps, actions, elements, or part or combination thereof in addition to the description.

Unless otherwise defined in the specification of the present disclosure, % unit refers to wt%.

Hereinafter, the present disclosure will be described in detail by each embodiment or example of the present disclosure. It should be noted that each embodiment or example described in the present specification is not only for describing one embodiment or example, but also for combining with other embodiments or examples. Accordingly, the citation of the claims is only an example of the embodiment and should not be interpreted only as a combination of the technical idea of the present disclosure with the cited claim, and various combinations with claims are also included in the scope of the technical idea of the present disclosure.

Hereinafter, the wire rod for a welding rod according to an embodiment of the present disclosure will be described. First, the alloy composition of the present disclosure will be described. The alloy composition described below is in wt%, unless otherwise particularly stated.

### C: 0.050 to 0.160%

C is an element favorable for securing strength of a weld zone by increasing hardenability. When the content of C is 0.050% or less, it may be difficult to impart sufficient strength to a welding metal when an ultra-high steel having a tensile strength of 1 GPa or more is welded. When the content of C is more than 0.160%, the viscosity of a molten metal is decreased during arc welding to deteriorate a bead shape, and also a welding metal is excessively hardened to increase brittleness. Therefore, the content of C may be in a range of 0.050 to 0.160%. The lower limit of the C content is more preferably 0.055%, still more preferably 0.060%, and most preferably 0.065%. The upper limit of the C content is more preferably 0.155%, still more preferably 0.150%, and most preferably 0.145%.

### Si: 0.0010 to 0.250%

Si is an element which promotes deoxidation of a molten metal during arc welding, and since it has an effect of suppress occurrence of pore defects such as blowhole, it is an element favorable for securing strength of a weld zone. When the content of Si is less than 0.0010%, pore defects such as blowhole easily occur in the weld zone due to lack of deoxidation ability. When the Si content is more than 0.250%, non-conductive slag occurs significantly, so that the electrodeposition paintability of the weld zone is deteriorated. Therefore, the Si content may be in a range of 0.0010 to 0.250%. The lower limit of the Si content may be more preferably 0.0025%, still more preferably 0.0050%, and most preferably 0.0010%. The upper limit of Si content is more preferably 0.18%, still more preferably 0.16%, and most preferably 0.14%.

### Mn: 1.0 to 2.50%

Mn is a deoxidation element, and since it has an effect of suppressing occurrence of pore defects such as blowhole by promoting deoxidation of a molten metal during arc welding, it is an element favorable for securing strength of the weld zone. When the content of Mn is less than 1.0%, deoxidation is insufficient within an appropriate range of the Si content, and pore defects such as blowhole may occur easily in the weld zone. When the content of Mn is more than 2.50%, the viscosity of the molten metal is excessively increased, and when a welding speed is high, the molten metal may not be introduced appropriately to a welding part, and thus, become humping beads, so that bead shape defects may easily occur. Therefore, the content of Mn may be in a range of 1.0 to 2.50%. The lower limit of the Mn content is more preferably 1.1%, still more preferably 1.2%, and most preferably 1.3%. The upper limit the Mn content is more preferably 2.45%, still more preferably 2.40%, and most preferably 2.35%.

### P: 0.030% or less (excluding 0%)

P is an impurity element included in steel, and when the content of P is more than 0.030%, crack occurrence at a high temperature of a welding metal may be sensitive. Meanwhile, it is favorable that P is not included in the steel if possible, but 0% is excluded considering the case in which P is inevitably included in the manufacturing process. Therefore, it is preferred that the content of P is 0.030% or less (excluding 0%). The content of P is more preferably 0.025% or less, still more preferably 0.0205% or less, and most preferably 0.015% or less.

### S: 0.030% or less (excluding 0%)

S is an impurity element included in steel, and when the content of S is more than 0.030%, it may impair toughness of a welding metal. Meanwhile, it is favorable that S is not included in the steel if possible, but 0% is excluded considering the case in which P is inevitably included in the manufacturing process. Therefore, it is preferred that the content of S is 0.030% or less (excluding 0%). The content of S is more preferably 0.025% or less, still more preferably 0.020% or less, and most preferably 0.015% or less.

### Cr: 0.40 to 6.0%

Cr is a ferrite stabilizing element and is a hardenable element favorable for securing strength of a welding metal. When the content of Cr is less than 0.40% or less, it may be difficult to impart sufficient strength to a welding metal when an ultra-high steel having a tensile strength of 1 GPa or more is welded. When the content of Cr is more than 6.0%, a δ-ferrite structure may form, or a chromium carbide in a structure is excessively precipitated to cause embrittlement a welding metal, that is, a decrease in toughness. Therefore, the content of Cr may be in a range of 0.40 to 6.0%. The lower limit of the Cr content is more preferably 0.70%, still more preferably 1.0%, and most preferably 1.20%. The upper limit the Cr content is more preferably 5.5%, still more preferably 5.0%, and most preferably 4.5%.

### Mo: 0.10 to 0.650%

Mo is a ferrite stabilizing element and is a hardenable element favorable for securing strength of a welding metal. When the content of Mo is less than 0.10% or less, it may be difficult to impart sufficient strength to a welding metal when an ultra-high steel having a tensile strength of 1 GPa or more is welded. When the content of Mo is more than 0.650%, the toughness of the welding metal may be decreased. Therefore, the content of Mo may be in a range of 0.10 to 0.650%. The lower limit of the Mo content is more preferably 0.15%, still more preferably 0.20%, and most preferably 0.25%. The upper limit the Mo content is more preferably 0.63%, still more preferably 0.61%, and most preferably 0.59%.

### Al: 0.20% or less (exclusive 0%)

Al is a deoxidation element and is an element favorable for securing strength of a welding metal by promoting deoxidation of the melting metal even in a trace amount during arc welding. In order to secure the effect described above, 0% is excluded as the lower limit of the content of Al. However, Al interferes with the oxidation reaction of Zn, for example, during welding of a zinc plating steel sheet as a deoxidation effect, thereby promoting occurrence of pore defects of a weld zone due to an increased zinc vapor and arc instability. When the content of Al is more than 0.20%, production of an Al-based oxide is increased, and in some cases, strength and toughness of the welding metal are decreased, and electrodeposition painting defects of the weld zone due to a non-conductive oxide becomes sensitive. Therefore, the content of Al may be in a range of 0.20% or less (excluding 0%). The lower limit of the Al content is more preferably 0.001%, still more preferably 0.002%, and most preferably 0.003%. The upper limit the Al content is more preferably 0.19%, still more preferably 0.18%, and most preferably 0.17%.

### Ni: 0.40% or less (exclusive 0%)

Ni is an element favorable for securing strength and toughness of a welding metal. In order to secure the effect described above, 0% is excluded as the lower limit of the content of Ni. When the content of Ni is more than 0.40%, sensitivity to cracks occurs. Therefore, the content of Ni may be in a range of 0.40% or less (exclusive 0%). The lower limit of the Ni content is more preferably 0.001%, still more preferably 0.002%, and most preferably 0.003%. The upper limit of the Ni content is more preferably 0.39%, still more preferably 0.38%, and most preferably 0.37%.

### Ti: 0.20% or less (exclusive 0%)

Ti is a carbonic acid element and is an element favorable for improving strength of a welding metal by promoting carbonization of the melting metal even in a trace amount during arc welding. In addition, development of acicular ferrite which may improve toughness of a weld zone is facilitated. In order to secure the effect described above, 0% is excluded as the lower limit of the content of Ti. When the content of Ti is more than 0.20%, production of a Ti-based oxide is increased, and in some cases, strength and toughness of the welding metal are decreased. Therefore, the content of Ti may be in a range of 0.20% or less (excluding 0%). The lower limit of the Ti content is more preferably 0.001%, still more preferably 0.002%, and most preferably 0.003%. The upper limit of the Ti content is more preferably 0.19%, still more preferably 0.18%, and most preferably 0.17%.

### Nb: 0.10% or less (exclusive 0%)

Nb is an element which increases hardenability and densifies a microstructure, and thus, is favorable for improving the strength and toughness of a welding metal. In addition, it has an effect of improving metal flow and stabilize arc during arc welding. In order to secure the effect described above, 0% is excluded as the lower limit of the content of Nb. When the content of Nb is more than 0.10%, a low-melting point compound is formed in a grain boundary, so that high-temperature cracks become more likely to occur. Therefore, the content of Nb may be in a range of 0.10% or less (excluding 0%). The lower limit of the Nb content is more preferably 0.001%, still more preferably 0.002%, and most preferably 0.003%. The upper limit of the Nb content is more preferably 0.09%, still more preferably 0.08%, and most preferably 0.07%.

The remaining component is iron (Fe). However, since in the common manufacturing process, unintended impurities may be unavoidably incorporated from raw materials or the surrounding environment, the component may not be excluded. Since these impurities are known to any person skilled in the common manufacturing process, the entire contents thereof are not particularly mentioned in the present specification.

The wire rod of the present disclosure may further include one or more of 0.20% or less of V 0.10% or less of Zr, and 0.01% or less of B.

### V: 0.20% or less

V is a precipitation strengthening element which may produce a carbonitride to improve the strength of a welding metal, and is an element favorable for improving the strength and toughness of the welding metal by increasing hardenability and densifying a microstructure. When the content of V is more than 0.20%, precipitates are excessively produced, so that, in some cases, toughness of the welding metal may be decreased by excessive strength. Therefore, the content of V may be in a range of 0.20% or less. The content of V is more preferably 0.19% or less, still more preferably 0.18% or less, and most preferably 0.17% or less. Meanwhile, in the present disclosure, the lower limit of the V content is not particularly limited, but, as an example, the lower limit may be 0.0001%.

### Zr: 0.10% or less

Zr is an element which promotes deoxidation of a molten metal during arc welding, and is an element favorable for suppressing occurrence of pore defects such as blowhole. When the content of Zr is more than 0.10%, the electrodeposition paintability of a weld zone may be reduced. Therefore, the content of Zr may be in a range of 0.10% or less. The content of Zr is more preferably 0.09% or less, still more preferably 0.08% or less, and most preferably 0.07% or less. Meanwhile, in the present disclosure, the lower limit of the Zr content is not particularly limited, but, as an example, the lower limit may be 0.0001%.

### B: 0.010% or less

B is an element favorable for improving the strength of a welding metal by increasing hardenability. When the content of B is more than 0.010%, the toughness of the welding metal may be decreased by excessive hardenability, in some cases. Therefore, the content of B may be in a range of 0.010% or less. The content of B is more preferably 0.009% or less, still more preferably 0.008% or less, and most preferably 0.007% or less. Meanwhile, in the present disclosure, the lower limit of the B content is not particularly limited, but, as an example, the lower limit may be 0.0001%.

The wire rod of the present disclosure may further include 0.50% or less of Cu.

### Cu: 0.50% or less

Cu is an element favorable for improving corrosion resistance. When the content of Cu is more than 0.50%, crack sensitivity of a welding metal may be increased. Therefore, the content of Cu may be in a range of 0.50% or less. The content of Cu is more preferably 0.45% or less, still more preferably 0.40% or less, and most preferably 0.35% or less. Meanwhile, in the present disclosure, the lower limit of the Cu content is not particularly limited, but, as an example, the lower limit may be 0.0001%.

The microstructure of the wire rod of the present disclosure may include bainitic ferrite. The bainitic ferrite may have a minimum size of effective grain of 0.50 µm or more. When the minimum size of the effective grain of the bainitic ferrite is less than 0.50 µm, the strength of the wire rod is excessively increased to decrease an elongation relatively. The minimum size of the effective grain of the bainitic ferrite may be more preferably 1.0 µm or more, still more preferably 1.5 µm or more, and most preferably 2.0 µm or more. In the present disclosure, the upper limit of the minimum size of the effective grain of the bainitic ferrite is not particularly limited, but, as an example, may be 3.0 µm.

The bainitic ferrite may have a minimum size of effective grain of 20.0 µm or less. When the maximum size of the effective grain of the bainitic ferrite is more than 20.0 µm, the strength of the wire rod may be relatively insufficient. The maximum size of the effective grain of the bainitic ferrite may be more preferably 19.0 µm or less, still more preferably 18.0 µm or less, and most preferably 17.0 µm or less. In the present disclosure, the lower limit of the maximum size of the effective grain of the bainitic ferrite is not particularly limited, but, as an example, may be 15.0 µm.

Meanwhile, the effective crystal grain size may be defined as an average size of crystal grains converted from the number of crystal grains per unit area according to the standard of ASTM E2627. Though not particularly defined, for example, in order to obtain the effective crystal grain size, measurement may be performed at least 10 times and up to 50 times at random points. Having the smallest value among the effective crystal grain sizes obtained herein is defined as the minimum size of the effective grain, and having the largest value may be defined as the maximum size of the effective grain. In addition, though not particularly defined, for example, in order to obtain the effective crystal grain average size, it may be defined as an average value of effective crystal grain sizes obtained by performing measurement at least 10 times and up to 50 times at different points of the wire rod.

The bainitic ferrite may have an average effective grain size of 10 µm or less. When the average effective grain size of the bainitic ferrite is more than 10 µm, it may be difficult to obtain both sufficient strength of the wire rod and elongation according to the Hall-Petch relationship. The average effective grain size of the bainitic ferrite may be more preferably 9 µm or less, still more preferably 8 µm or less, and most preferably 7 µm or less.

The microstructure of the wire rod of the present disclosure may include, by area, 0.50% or less (including 0%) of retained austenite and a remainder of bainitic ferrite. The bainitic ferrite is a structure favorable for securing the strength and elongation of the wire rod. Meanwhile, the retained austenite is an impure structure which is unavoidably included in the manufacturing process. Since it is preferred that the retained austenite is not included as possible, the fraction is favorably 0%. However, considering that the retained austenite may be unavoidably included in the present disclosure, the upper limit may be defined as 0.5%. When the fraction is more than 0.50%, the size somewhat changes in the process in which the retained austenite transforms into martensite during wire drawing of the wire rod, and thus, in some cases, the dimensional accuracy of the wire-drawn wire rod may be reduced in the transformation process.

The wire rod of the present disclosure provided as described above may have a tensile strength of 840 to 1000 MPa. In addition, the wire rod of the present disclosure may have a reduction of area (RA) of 60 to 75%. Also, the wire rod of the present disclosure may secure a first wire drawing speed of 300 m/min or more and a second wire drawing speed of 250 m/min or more even when a pre-heat treatment process before the first wire drawing is omitted during welding rod manufacture. Further, it may be manufactured at low cost and preferably used as a welding rod for a steel material such as giga steel grade vehicles.

Hereinafter, the method for manufacturing a wire rod for a welding rod according to an embodiment of the present disclosure will be described.

First, a billet satisfying the alloy composition described above is prepared. In the present disclosure, the process of preparing a billet is not particularly defined, and any method used in the art may be used.

Thereafter, the billet is reheated at 1050 to 1250°C. The temperature range herein refers to a cracking zone, among a preheating zone, a heating zone, and a cracking zone in a reheating section. That is, a relatively low temperature is maintained in the heating zone, and the maintained temperature is slowly raised from the heating zone to the cracking zone. When the reheating temperature is lower than 1050°C, the inside and outside of the billet is not uniformly heated, and the rolling temperature of the subsequent billet is lowered to cause deformation in the shape of the material in a rolling process, which may be obstacles during a rolling process. When the reheating temperature of the billet is higher than 1250°C, bending of the material occurs, which may cause a problem during extraction by heating. The lower limit of the reheating temperature of the billet is more preferably 1060°C, still more preferably 1070°C, and most preferably 1080°C. The upper limit of the reheating temperature of the billet is more preferably 1240°C, still more preferably 1220°C, and most preferably 1200°C.

Thereafter, the reheated billet is extracted at 1050 to 1150°C, and then wire rod rolling is performed to obtain a wire rod. When the billet extraction temperature is lower than 1050°C, the rolling load of the billet is excessive, so that rolling equipment is overloaded, which may be obstacles during a rolling process. When the biller extraction temperature is higher than 1150°C, heat damage at a high temperature of a rolling roll becomes sensitive, and the temperature is excessively high during rolling, so that the shape of the billet may become poor. The lower limit of the billet extraction temperature is more preferably 1060°C, still more preferably 1070°C, and most preferably 1080°C. The upper limit of the billet extraction temperature is more preferably 1140°C, still more preferably 1130°C, and most preferably 1120°C. Herein, the extraction temperature may not be higher than the reheating temperature.

Thereafter, the wire rod is coiled at 860 to 940°C. When the coiling temperature is lower than 860°C, the elongation of the wire rod is reduced, and a coiling shape may be deteriorated. When the coiling temperature is higher than 940°C, deviations of the material property and mechanical property of the wire rod are adversely affected, and an oxide scale may be excessively formed on the surface of the wire rod. The lower limit of the coiling temperature is more preferably 870°C, still more preferably 880°C, and most preferably 890°C. The upper limit of the coiling temperature is more preferably 930°C, still more preferably 920°C, and most preferably 910°C.

Thereafter, the coiled wire rod is cooled at a cooling rate of 2.0 to 3.0°C/s on a Stelmor cooling conveyor. When the cooling rate is less than 2.0°C/s, the material property of the wire is softened, and in some cases, coil sagging may occur, leading to coiling defects. When the cooling rate is more than 3.0°C/s, the material of the wire is hardened to reduce workability, and thus, a pre-heat treatment is required during wire drawing, and manufacturing costs are increased. The lower limit of the cooling rate is more preferably 2.1°C/s, still more preferably 2.2°C/s, and most preferably 2.3°C/s. The upper limit of the cooling rate is more preferably 2.9°C/s, still more preferably 2.8°C/s, and most preferably 2.7°C/s.

### Mode for Invention

Hereinafter, the present disclosure will be described in detail through the examples. However, it should be noted that the examples described later are only for embodying the present disclosure by illustration and not intended to limit the right scope of the present disclosure. The reason is that the right scope of the present disclosure is determined by the matters described in the claims and reasonably inferred therefrom.

### (Examples)

Billets having the alloy compositions described in Tables 1 and 2 were prepared, and then subjected to billet reheating, wire rod rolling, coiling, and cooling under the conditions described in Table 3 to manufacture a wire rod. The microstructure, the mechanical properties, and the like of the wire rods manufactured as such were measured, and the results are shown in the following Table 4. Also, the manufactured wire rods were subjected to first wire drawing and second wire drawing without a pre-heat treatment process to manufacture welding rods, and at this time, the first wire drawing speed and the second wire drawing speed were measured, and the results are shown in the following Table 4.

The microstructure and effective crystal grain size was obtained by collecting specimens from the wire rods, grinding the cross-sectional structure of the specimen, etching with a Nital solution, and observing an optical microscope. In addition, image quality (IQ) and inverse pole figure (IPF) maps in which crystal grain boundary and crystal grain orientation information were visualized by analyzing a Kikuchi pattern through electron backscattered diffraction (EBSD) were obtained. Thereafter, crystal grains were classified referring to IQ and IPF maps of EBSD with a microstructure photograph observed with the optical microscope described above, an effective crystal grain size converted from the number of crystal grains per unit area was calculated, and the measurement as such was performed at least 10 times and up to 50 times at other points to measure an average effective grain size.

Among the mechanical properties, tensile strength was measured using the test method suggested in the standard of ASTM A370.

Among the mechanical properties, the reduction of area was measured using the test method suggested in the standard of ASTM A 370, and was shown as a percentage of a value obtained by dividing a difference between an initial diameter of the wire rod and a diameter when rupture occurred by an initial diameter of the wire rod.

**[Table 1]**

| Steel type No. | Alloy composition (wt%) | | | | | | | |
|---|---|---|---|---|---|---|---|---|
| | C | Si | Mn | P | S | Cr | Mo | Al |
| 1 | 0.07 | 0.06 | 1.70 | 0.009 | 0.006 | 1.44 | 0.52 | 0.003 |
| 2 | 0.07 | 0.07 | 1. 69 | 0.017 | 0.006 | 1.44 | 0.51 | 0.01 |
| 3 | 0.08 | 0.09 | 1.71 | 0.009 | 0.005 | 1.40 | 0.53 | 0.022 |
| 4 | 0.08 | 0.11 | 1.82 | 0.009 | 0.007 | 1.38 | 0.56 | 0.015 |
| 5 | 0.07 | 0.37 | 1.65 | 0.011 | 0.006 | 0.50 | 0.30 | 0.006 |
| 6 | 0.06 | 0.52 | 1.48 | 0.002 | 0.003 | 0.03 | 0.57 | 0.002 |
| 7 | 0.05 | 0.26 | 1.54 | 0.008 | 0.006 | 0.01 | 0.35 | 0.010 |
| 8 | 0.09 | 0.45 | 1.60 | 0.005 | 0.005 | 0.15 | 0.30 | 0.001 |

**[Table 2]**

| Steel type No. | Alloy composition (wt%) | | | | | | |
|---|---|---|---|---|---|---|---|
| | Ni | Ti | Nb | v | Zr | B | Cu |
| 1 | 0.018 | 0.003 | 0.001 | 0.001 | - | - | 0.016 |
| 2 | 0.011 | 0.002 | 0.04 | - | - | - | - |
| 3 | 0.012 | 0.035 | 0.05 | - | 0.002 | - | 0.013 |
| 4 | 0.018 | 0.049 | 0.10 | - | - | 0.001 | 0.013 |
| 5 | 3.00 | 0.040 | 0.003 | 0.001 | 0.001 | - | 0.007 |
| 6 | 3.42 | 0.002 | 0.001 | 0.003 | - | 0.001 | 0.015 |
| 7 | 2.00 | 0.004 | 0.002 | 0.001 | 0.003 | 0.001 | 0.009 |
| 8 | 2.54 | 0.030 | 0.001 | 0.002 | 0.001 | 0.001 | 0.010 |

**[Table 3]**

| Classification | Steel type No. | Billet reheating temperature (°C) | Extraction temperature (°C) | Coiling temperature (°C/s) | Cooling rate (°C) |
|---|---|---|---|---|---|
| Inventive Example 1 | 1 | 1050 | 1050 | 860 | 2.7 |
| Inventive Example 2 | 2 | 1100 | 1100 | 895 | 2.5 |
| Inventive Example 3 | 3 | 1200 | 1140 | 904 | 2.0 |
| Inventive Example 4 | 4 | 1250 | 1150 | 940 | 3.0 |
| Comparative Example 1 | 5 | 1150 | 1150 | 930 | 3.0 |
| Comparative Example 2 | 6 | 1080 | 1090 | 890 | 2.6 |
| Comparative Example 3 | 7 | 1250 | 1050 | 920 | 2.9 |
| Comparative Example 4 | 8 | 1230 | 1140 | 883 | 2.3 |
| Comparative Example 5 | 1 | 1000 | 995 | 845 | 1.9 |
| Comparative Example 6 | 1 | 1270 | 1250 | 950 | 3.2 |
| Comparative Example 7 | 1 | 985 | 980 | 855 | 1.8 |
| Comparative Example 8 | 1 | 1010 | 1000 | 945 | 1.8 |
| Comparative Example 9 | 1 | 1025 | 1015 | 960 | 1.6 |
| Comparative Example 10 | 1 | 1280 | 1260 | 975 | 3.1 |
| Comparative Example 11 | 1 | 1045 | 1030 | 955 | 1.9 |
| Comparative Example 12 | 1 | 995 | 990 | 850 | 3.0 |

**[Table 4]**

| Classificat ion | Microstruct ure (% by area) | | Minimum effective grain size of BF (µm) | Maximum effective grain size of BF (µm) | Average effective grain size of BF (µm) | Tensile strength (MPa) | Reducti on of area (%) | First wire drawing speed (m/min) | Second wire drawing speed (m/min) |
|---|---|---|---|---|---|---|---|---|---|
| | BF | RA | | | | | | | |
| Inventive Example 1 | 99.99 | 0.01 | 2.6 | 17.5 | 7.8 | 842 | 74 | 300 | 250 |
| Inventive Example 2 | 99.98 | 0.02 | 2.6 | 19.8 | 7.4 | 932 | 68 | 350 | 275 |
| Inventive Example 3 | 99.99 | 0.01 | 2.6 | 18.1 | 5.8 | 959 | 67 | 325 | 260 |
| Inventive Example 4 | 100.0 | 0 | 0.6 | 18.0 | 6.3 | 998 | 61 | 375 | 280 |
| Comparative Example 1 | 99.45 | 0.55 | 2.6 | 21.3 | 8.1 | 1010 | 58 | 175 | 215 |
| Comparative Example 2 | 99.37 | 0.63 | 0.4 | 14.8 | 7.9 | 1024 | 54 | 150 | 200 |
| Comparative Example 3 | 99.48 | 0.52 | 3.2 | 24.3 | 10.4 | 1168 | 51 | 160 | 210 |
| Comparative Example 4 | 99.64 | 0.36 | 3.0 | 23.7 | 10.2 | 840 | 58 | 155 | 205 |
| Comparative Example 5 | 99.99 | 0.01 | 0.3 | 13.2 | 6.7 | 985 | 57 | 165 | 195 |
| Comparative Example 6 | 100.0 | 0 | 3.5 | 20.5 | 11.5 | 837 | 59 | 290 | 240 |
| Comparative Example 7 | 100.0 | 0 | 0.4 | 11.8 | 6.1 | 1015 | 52 | 245 | 230 |
| Comparative Example 8 | 99.99 | 0.01 | 2.8 | 20.2 | 7.5 | 997 | 56 | 295 | 250 |
| Comparative Example 9 | 99.99 | 0.01 | 3.3 | 21.5 | 12.4 | 989 | 55 | 290 | 245 |
| Comparative Example 10 | 100.0 | 0 | 3.8 | 22.4 | 13.2 | 973 | 58 | 280 | 235 |
| Comparative Example 11 | 99.99 | 0.01 | 3.5 | 22.1 | 12.8 | 992 | 57 | 285 | 240 |
| Comparative Example 12 | 100.0 | - | 0.4 | 13.0 | 7.2 | 987 | 55 | 270 | 225 |
| BF: bainitic ferrite, RA: retained austenite | | | | | | | | | |

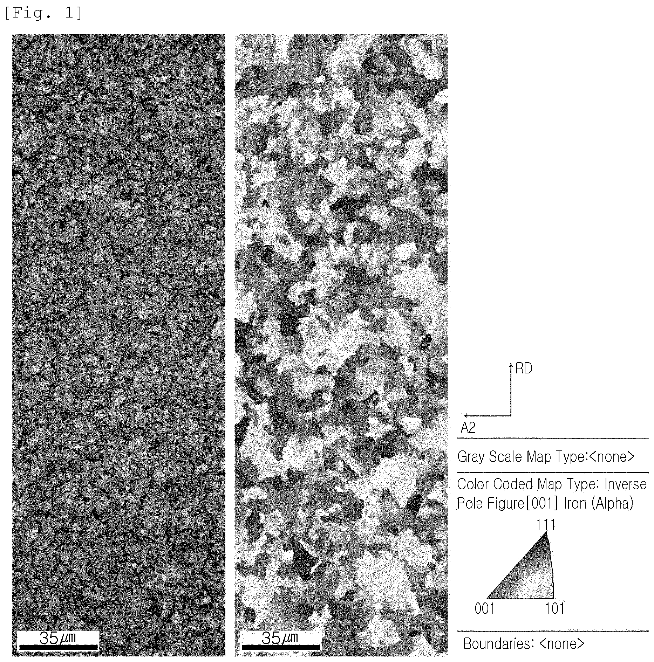

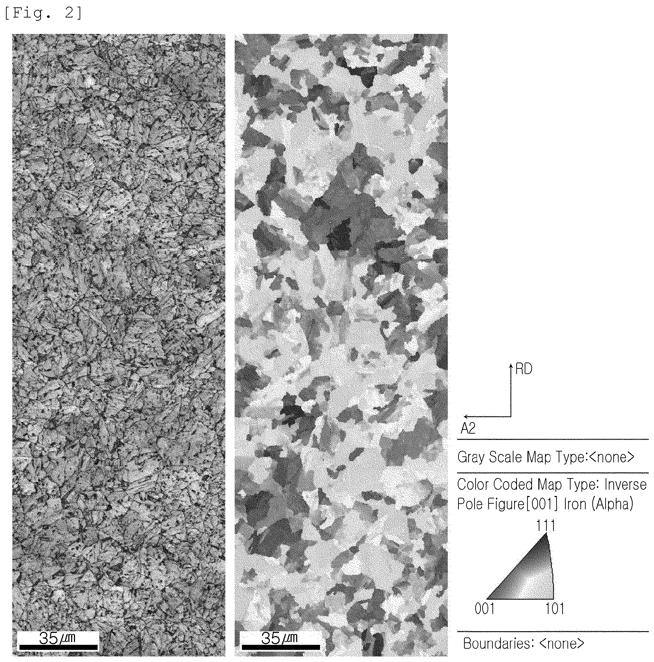

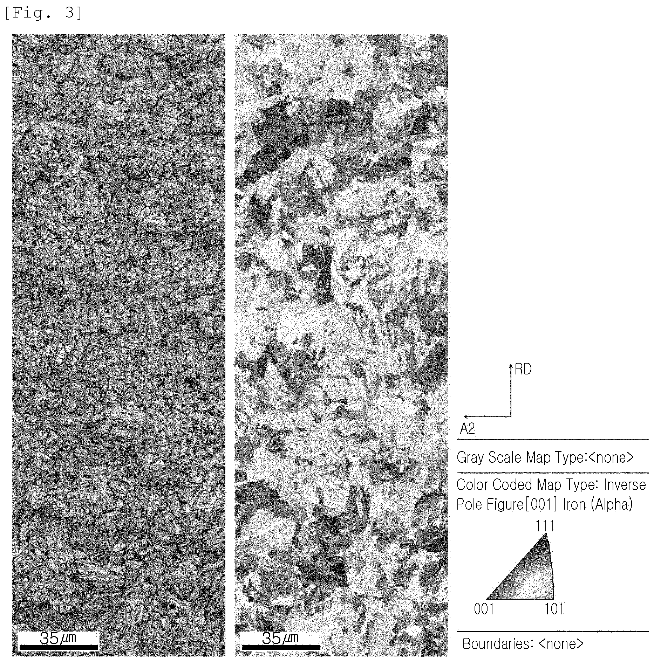

FIG. 1 is image quality (IQ) and inverse pole figure (IPF) photographs observing Inventive Example 2 with EBSD. FIG. 2 is image quality (IQ) and inverse pole figure (IPF) photographs observing Comparative Example 3 with EBSD. FIG. 3 is image quality (IQ) and inverse pole figure (IPF) photographs observing Comparative Example 7 by EBSD. As seen from Tables 1 to 4 and FIGS. 1 to 3, since Inventive Examples 1 to 4 satisfying the alloying composition and the manufacturing conditions of the present disclosure satisfied the microstructure, the minimum and maximum sizes of effective grain of bainitic ferrite, and the average effective grain size of bainitic ferrite, they secured the tensile strength and the reduction of area targeted by the present disclosure. Also, it was found that even when the pre-heat treatment process before the first wire drawing during welding rod manufacture was omitted, the first wire drawing speed and the second wire drawing speed were at high levels.

Since Comparative Examples 1 to 4 which did not satisfy the alloy composition of the present disclosure did not secure the microstructure suggested by the present disclosure or did not satisfy the minimum size or maximum size of the effective grain of bainitic ferrite or the average effective grain size of bainitic ferrite, it was found that the tensile strength or the reduction of area targeted by the present disclosure was not secured. Also, it was found that the first wire drawing speed or the second wire drawing speed during welding rod manufacture was at a low level.

Since Comparative Examples 5 to 12 which did not satisfy manufacturing conditions of the present disclosure did not satisfy the minimum size or maximum size of the effective grain of bainitic ferrite or the average effective grain size of bainitic ferrite, which is suggested by the present disclosure, it was found that the tensile strength or the reduction of area targeted by the present disclosure was not secured. Also, it was found that the first wire drawing speed or the second wire drawing speed during welding rod manufacture was at a low level.

## Claims

1. A wire rod for a welding rod comprising, by weight: 0.050 to 0.160% of C, 0.0010 to 0.250% of Si, 1.0 to 2.50% of Mn, 0.030% or less (excluding 0%) of P, 0.030% of less (excluding 0%) of S, 0.40 to 6.0% of Cr, 0.10 to 0.650% of Mo, 0.20% of less (excluding 0%) of Al, 0.40% of less (excluding 0%) of Ni, 0.20% of less (excluding 0%) of Ti, 0.10% of less (excluding 0%) of Nb, a remainder of Fe, and other unavoidable impurities,
wherein the microstructure includes bainitic ferrite,
the bainitic ferrite has a minimum size of effective grain of 0.50 µm or more, and
the bainitic ferrite has a maximum size of effective grain of 20.0 µm or less.

2. The wire rod for a welding rod of claim 1, wherein the wire rod further include: 0.20% or less of V, 0.10% or less of Zr, and 0.010% or less of B.

3. The wire rod for a welding rod of claim 1, wherein the wire rod further includes 0.50% or less of Cu.

4. The wire rod for a welding rod of claim 1, wherein the microstructure includes, by area: 0.50% or less (including 0%) of retained austenite and a remainder of bainitic ferrite.

5. The wire rod for a welding rod of claim 1, wherein the bainitic ferrite has an average effective grain size of 10 µm or less.

6. The wire rod for a welding rod of claim 1, wherein the wire rod has a tensile strength of 840 to 1000 MPa.

7. The wire rod for a welding rod of claim 1, wherein the wire rod has a reduction of area (RA) of 60 to 75%.

8. A method for manufacturing a wire rod for a welding rod, the method comprising:
preparing a billet including, by weight: 0.050 to 0.160% of C, 0.0010 to 0.250% of Si, 1.0 to 2.50% of Mn, 0.030% or less (excluding 0%) of P, 0.030% of less (excluding 0%) of S, 0.40 to 6.0% of Cr, 0.10 to 0.650% of Mo, 0.20% of less (excluding 0%) of Al, 0.40% of less (excluding 0%) of Ni, 0.20% of less (excluding 0%) of Ti, 0.10% of less (excluding 0%) of Nb, a remainder of Fe, and other unavoidable impurities;
reheating the billet at 1050 to 1250°C;
extracting the reheated billet at 1050 to 1150°C, and then performing wire rod rolling to obtain a wire rod;
coiling the wire rod at 860 to 940°C; and
cooling the wire rod at a cooling rate of 2.0 to 3.0°C/s on a Stelmor cooling conveyor.

9. The method for manufacturing a wire rod for a welding rod of claim 8, wherein the billet further includes one or more of 0.20% or less of V, 0.10% or less of Zr, and 0.010% or less of B.

10. The method for manufacturing a wire rod for a welding rod of claim 8, wherein the billet further includes 0.50% or less of Cu.
